# EUROPEAN PATENT SPECIFICATION

(11) **EP 1 213 961 B1**
(45) Date of publication and mention of the grant of the patent: **03.03.2004**
(21) Application number: 00964768.6
(22) Date of filing: 19.09.2000
(51) Int. Cl.: A01N 25/14, A01N 43/40, A01N 43/90

(54) **WATER DISPERSIBLE GRANULE CONTAINING PARAQUAT DICHLORIDE AND ITS PREPARING METHOD**
PARAQUATDICHLORID ENTHALTENDES WASSERDISPERGIERBARE GRANULAT UND HERSTELLUNGSMETHODE DAFÜR
GRANULE DISPERSABLE DANS L'EAU CONTENANT UN DICHLORURE DE PARAQUAT ET SON PROCEDE DE PREPARATION

(30) Priority: 22.09.1999 KR 9941035
(43) Date of publication of application: 19.06.2002
(73) Proprietor: Dongbu Hannong Chemical Co., Ltd., Seoul 135-080 (KR)
(72) Inventor: CHUNG, Bong Jin, Anyang-city, Kyungki-do 431-088 (KR); KIM, Seung Ho, Namdong-gu, Inchun 405-244 (KR); CHUNG, Kwang Jin, Suwon-City, Kyungki-do 441-390 (KR); AN, Byoung Woo, Suwon-city, Kyungki-do 441-112 (KR); KWON, Oh Yeon, Kyungki-do 445-890 (KR); YOO, Hong Jae, Hwasung-gun, Kyungki-do 445-960 (KR); KWON, Yong, Woong, Kyungki-do 441-100 (KR)
(74) Representative: Becker Kurig Straus
(86) International application number: PCT/KR2000/001051
(87) International publication number: WO 2001/020984

(56) References cited:
- EP-A- 0 273 551
- EP-A- 0 475 392
- GB-A- 1 507 407
- GB-A- 1 555 489
- JP-A- 11 199 409
- US-A- 4 118 218
- US-A- 5 635 445

## Description

### Technical Field

The present invention relates to a method for preparing water dispersible granule containing Paraquat Dichloride (hereunder referred to as "Paraquat"). Paraquat, an active component of a nonselective herbicide, is generally known not to show herbicidal activity since it is strongly adsorbed to minerals in the soil. More particularly, the invention relates to a water dispersible granule containing Paraquat and its preparing method that comprises mixing and kneading 5-50wt% of Paraqua*t*, 5-30wt% of surfactant, 1-20wt% of breakage promoter and the rest of extender, forming granules out of kneaded mixture using a granulator, and drying the granules.

### Background Art

Soluble concentrate of 24.5%-Paraquat, currently sold in the market may cause skin damage and may be absorbed through skin when it comes in contact with skin. The soluble concentrate sprayed may be inhaled through the respiratory organ to cause poisoning. Further, it can be fatal to ingest it by accident or on purpose unless first aid is taken within 4 hours after ingestion.

In case anionic surfactant is added to increase adhesion between leaf and Paraquat, there may be problem of cohesion or precipitation between Paraqua*t* and anionic surfactant. There was an attempt to solve this problem using aliphatic or aromatic chelating compound (US Patent No. 5668086). However, it could not solve aforementioned safety problem.

To solve the safety problem, there was an attempt to prepare Paraquat composition having a formulation type other than soluble concentrate type. However, the attempt was limited since Paraquat is known to be adsorbed tightly to minerals, especially to the ones used as extenders such as clay, bentonite, talc, pyrophyllite and montmorillonite, and consequently show no herbicidal activity.

As another attempt, a method of preparing a water soluble granule by mixing powedery amitrole with liquid Paraquat was reported (US Patent No. 5635445). However, the water soluble granule provides weaker effect than the soluble concentrate, and cost is increased because it is prepared with two components.

*US 4,118,218* discloses a process of preparing a solid granular composition containing a herbicidal bipyridylium diquaternary salt such as paraquat dichloride in association with sodium chloride and calcium chloride and a surface-active agent (column 1, lines 48 to 56 with column 3, lines 46 to 48, column 4 lines 49). The process of preparing a solid granular herbicidal formulation containing a high concentration of a bipyridylium diquaternary salt, comprises injecting into a solution of the paraquart dichloride a heated fluid bed of a carrier (column 1, lines 56 to 63). The fluid bed is maintained at an elevated temperature in the range of 100-250 °C (column 2, lines 9 to 11).

*EP 0 475 392* describes a herbicidal composition comprising a specific urea (Compound A) or a salt thereof and at least one member selected from the group consisting of a specific glycidine, 1,1'-dimethly-4,4'-bipyridinium ion, 1,1'-ethylene-2,2'-bipyridinium ion and salts thereof (Compound B) (page 2, lines 3 to 8). The composition can comprise further additive such as extenders, surfactants and breakage promoter (page 3, lines 36 to 42), which are also mentioned as extenders and breakage promoters according to the present invention.

*GB 1 507407* discloses a herbicidal composition containing a herbicidal bipyridylium quaternary salt as an active ingredient such as paraquat dichloride, a surfactant and breakage promoter such as sodium metaborates and potassium phosphate.

However, the herbicidal composition is only prepared by simple agitation (Example 1 to 3, 5, 8, 9) or spray drying granulation using aqueous solution (especially in Example 4). In addition, the composition may comprise a carrier or diluent, which may be solids, e.g. granules, or liquids, e.g. aqueous solutions.

Further, there was an attempt to prepare the paraquat composition as a wettable powder, which has problems of inhalation poisoning of the scattered powder and cost increase related to the purification of Paraqua*t*.

Accordingly, it is required to prepare a formulation type which solves aforementioned problems and has superior herbicidal effect, safety and low cost.

### Disclosure of Invention

An object of the present invention is to provide a method for preparing a water dispersible granule and its preparing method which comprises mixing and kneading Paraquat, surfactant, breakage promoter, and extender; forming granules out of kneaded mixture; and drying the granules. In this case, Paraquat is, an active component of nonselective herbicide, is known not to show herbicidal activity due to its strong adsorption to minerals in the soil, particularly to the ones used as extenders such as clay, bentonite, talc, pyrophyllite and montmorillonite. Further, the water dispersible granule shows a superior herbicidal effect on weeds on ridgeway or non-farm land, compared with the soluble concentrate or the wettable powder of Paraquat.

Another object of the present invention is to provide a safe agrichemical composition which reduces poisoning caused by contact or ingestion and prevents the danger of intake by accident or on purpose, by mixing Paraquat (active component of the agrichemical), surfactant, breakage promoter and extender, and forming granules out of mixture.

To achieve the object of the invention, water dispersible granule containing paraquat according to the present invention comprises 5-50wt% of Paraquat, 5-30wt% of surfactant, 1-20wt% of breakage promoter and the rest of extender, wherein said water dispersible granule is prepared by mixing the above components, kneading mixture together with a small amount of water, forming granules out of kneaded mixture using a granulator or the like and drying the granules.

Paraquat, an agrichemical active component, is a superior herbicidal active compound, which shows fast effect and removes various weeds.

As the surfactant, anionic surfactant and/or nonionic surfactant can be used.

As the breakage promoter, at least one selected from the group consisting of sodium sulfate (Na₂SO₄), sodium nitrate (NaNO₃), potassium chloride (KCl), ammonium sulfate ((NH₄)₂SO₄), urea, polyvinyl pyrrolidone and the like can be used.

As the extender, at least one selected from the group consisting of diollite, kaolin, clay, white carbon, watersoluble starch, calcium carbonate, bentonite, pyrophyllite, talc and the like can be used.

A preparing method of water dispersible granule containing paraquat according to the present invention comprises: a) mixing paraquat dichloride, surfactant, breakage promoter and extender, and kneading mixture together with 1-15wt% of water for the mixture at room temperature for lOmin-lhr; b) forming granules out of product of step a) using a granulator; and c) drying product of step b) in a fluidized bed dryer at 70-150°C for 10min-1hr.

### Best Mode for Carrying Out the Invention

Water dispersible granule containing paraquat prepared according to the method of the present invention comprises 5-50wt% of Paraquat, 5-30wt% of surfactant, 1-20wt% of breakage promoter and the rest of extender, wherein said water dispersible granule is prepared by mixing the above components, kneading mixture together with a small amount of water, forming granules out of kneaded mixture using a granulator or the like and drying the granules.

The Paraquat removes weeds on ridgeway or non-farm land directly and has the chemical name of 1,1'-dimethyl-4,4'-bipyridyldiylium dichloride. The purity of paraquat may be in the range of 1-100%, and can be selected adequately according to suppliers of paraquat or formulation types.

The surfactant is compound having large surface activity and amphiphilic compound which has both hydrophilic and lipophilic groups in molecule thereof. It is characterized by its superior detergent power, dispersion power, emulsification power, solubilization power, wetting power, germicidal power, bubbling power and infiltration power. It acts as wetting, breakage and dispersion compound such that paraquat can show its activity effectively.

As the surfactant, there can be used at least one selected from the group consisting of sodium or calcium salts of sulfonate such as alkyl (C₈₋₁₂) arlylsulfonate, dialkyl (C₃₋₆) arylsulfonate, dialkyl (C₈₋₁₂) arylsulfosuccinate, ligninsulfonate, naphthalenesulfonate condensate, naphthalenesulfonate formalin condensate, alkyl (C₈₋₁₂) naphthalenesulfonate formalin condensate and polyoxyethylenealkyl (C₈₋₁₂) phenylsulfonate; sodium or calcium salts of sulfate such as alkyl (C₈₋₁₂) sulfate, alkyl (C₈₋₁₂) arylsulfate, polyoxyethylenealkyl (C₈₋₁₂) sulfate and polyoxyethylene alkyl (C₈₋₁₂) phenylsulfate; sodium or calcium salts of succinates such as polyoxyalkylenesuccinate; anionic surfactant such as sodium benzoate and alkylcarboxylate; and nonionic surfactant such as polyoxyethelynenealkyl (C₈₋₁₂) ether, polyoxyethelynenealkyl (C₈₋₁₂) phenylether, polyoxyethelynenealkyl (C₈₋₁₂) phenyl polymer and ethylene oxide propylene oxide copolymer. The above compounds are only examples and it may be easily understood to the one in the art that the other surfactants can also be used.

The breakage promoter facilitates breakage and dispersion of the water dispersible granule containing paraquat according to the present invention. There can be used as the breakage promoter at least one selected from the group consisting of Sodium sulfate (Na₂SO₄), sodium nitrate (NaNO₃), potassium chloride (KCI), ammonium sulfate ((NH₄)₂SO₄), urea, polyvinyl pyrrolidone and the like.

The extender works as filler of the water dispersible granule according to the present invention. It maintains the shape of the water dispersible granule and supports the effect development of the agrichemical active component. There can be used as the extender at least one selected from the group consisting of Diollite, kaolin, clay, white carbon, water-soluble starch, bentonite, pyrophillite, talc and the like. It may be easily understood to the one in the art that the other extenders can also be used.

Hereunder is given detailed description of the water dispersible granule according to the present invention using examples and comparative examples. The following examples are intended to be illustrative of the present invention and should not be construed as limiting the scope of the present invention.

### Example 1

30wt% of 42.5%-Paraquat, 5wt% of sodium naphthalenesulfonate formaldehyde condensate, 2wt% of ethylene oxide propylene oxide copolymer, 5wt% of octylnaphthlalenesulfonate, 5wt% of ammonium sulfate and the rest of pyrophillite were mixed. Then, the mixture was kneaded together with 8wt% of water for the mixture at room temperature for 30 minutes. Next, granules were formed out of kneaded mixture using a granulator. Then, the granules were dried in a fluidized bed dryer at 120°C of suction air for 30minutes. Thus prepared water dispersible granules was used for biotest and physicochemical analysis.

### Example 2

30wt% of 42.5%-Paraquat, 5wt% of sodium octylnaphthalenesulfonate, 2wt% of ethylene oxide propylene oxide copolymer, 5wt% of octybenzenesulfate, 5wt% of sodium nitrate and the rest of pyrophillite were mixed. Hereinafter, the procedure of Example 1 was followed.

### Example 3

40wt% of 42.5%-Paraquat, 5wt% of sodium naphthalenesulfonate formaldehyde condensate, 2wt% of ethylene oxide propylene oxide copolymer, 5wt% of octylnaphthlalenesulfonate, 5wt% of ammonium sulfate and the rest of pyrophillite were mixed. Hereinafter, the procedure of Example 1 was followed.

### Example 4

40wt% of 42.5%-Paraquat, 5wt% of sodium octylnaphthalenesulfonate, 2wt% of ethylene oxide propylene oxide copolymer, 5wt% of octybenzenesulfate, 5wt% of sodium nitrate and the rest of pyrophillite were mixed. Hereinafter, the procedure of Example 1 was followed.

### Comparative Example 1

Soluble concentrate of 24.5%-Paraquat solution commercially available was purchased and used for biotest in order to compare with the examples of the present invention.

### Comparative Example 2

Soluble concentrate of 41%-glyphosate isopropylamine was purchased and used for biotest in order to the comparison with the examples of the present invention.

### Test of Agrichemical Effect on Barnyard Millet

After treating the barnyard millet with the products prepared from the examples and the comparative examples, the agrichemical effect was checked 1, 2, 4, 7, 10 and 14 days respectively after treatment.

The barnyard millet having the length of 42cm was treated according to the results are also disclosed in the following Table 1.

**Table 1.**

| Test Result for Barnyard Millet | | | | | | | |
|---|---|---|---|---|---|---|---|
| | Dosage (/10a) | Agrichemical Effect after Treatment(%) | | | | | |
| | | 1 Day | 2 Day | 4 Day | 7 Day | 10 Day | 14 Day |
| Example 1 | 580g | 90 | 95 | 95 | 90 | 85 | 70 |
| | 1160g | 96 | 98 | 97 | 94 | 90 | 90 |
| Example 2 | 580g | 90 | 93 | 94 | 88 | 80 | 73 |
| | 1160g | 95 | 96 | 97 | 93 | 88 | 85 |
| Example 3 | 435g | 93 | 94 | 96 | 90 | 80 | 75 |
| | 870g | 96 | 98 | 98 | 94 | 92 | 88 |
| Example 4 | 435g | 92 | 95 | 93 | 90 | 80 | 78 |
| | 870g | 96 | 96 | 96 | 92 | 90 | 88 |
| Comparative Example 1 | 300ml | 90 | 94 | 94 | 90 | 77 | 60 |
| | 600ml | 95 | 96 | 95 | 88 | 80 | 60 |
| Comparative Example 2 | 300ml | 5 | 10 | 20 | 70 | 82 | 93 |
| | 600ml | 10 | 20 | 30 | 85 | 88 | 97 |

As is shown above, the water dispersible granule prepared according to each example showed superior agrichemical effect against barnyard millets, compared with the soluble concentrate of paraquat in comparative example 1 in treatment with reference and double quantity. It also showed superior effect-continuation, that is, lower regenerating ratio after 5 days, and showed much superior initial effect, compared with the soluble concentrate of glyphosate in comparative example 2.

### Test of Agrichemical Effect on Crab grass

After treating the crab grasses with the products prepared from the examples and the comparative examples, the agrichemical effect was checked 1, 2, 4, 7, 10 and 14 days respectively after treatment.

The crab grasses having the length of 45cm was treated according to the results are also disclosed in the following Table 2.

**Table 2.**

| Test Result for Crab Grass | | | | | | | |
|---|---|---|---|---|---|---|---|
| | Dosage (/10a) | Agrichemical Effect after Treatment (%) | | | | | |
| | | 1 Day | 2 Day | 4 Day | 7 Day | 10 Day | 14 Day |
| Example 1 | 580g | 94 | 98 | 99 | 98 | 88 | 74 |
| | 1160g | 96 | 98 | 99 | 99 | 96 | 90 |
| Example 2 | 580g | 95 | 97 | 98 | 98 | 90 | 73 |
| | 1160g | 98 | 98 | 99 | 99 | 98 | 95 |
| Example 3 | 435g | 96 | 98 | 98 | 99 | 93 | 85 |
| | 870g | 97 | 98 | 98 | 98 | 92 | 88 |
| Example 4 | 435g | 94 | 97 | 98 | 96 | 90 | 78 |
| | 870g | 96 | 99 | 99 | 99 | 97 | 88 |
| Comparative Example 1 | 300ml | 94 | 96 | 95 | 93 | 87 | 70 |
| | 600ml | 95 | 97 | 97 | 96 | 90 | 80 |
| Comparative Example 2 | 300ml | 10 | 20 | 40 | 75 | 92 | 95 |
| | 600ml | 15 | 30 | 50 | 85 | 93 | 99 |

As is shown above, the water dispersible granule prepared according to each example showed superior agrichemical effect against crab grass, compared with the soluble concentrate of paraquat in comparative example 1 in treatment with reference and double quantity. It also showed superior effect-continuation, and showed much superior initial effect(94% or more).

### Test of Agrichemical Effect on Fleabane

After treating the fleabanes with the products prepared from the examples and the comparative examples, the agrichemical effect was checked 1, 2, 4, 7, 10 and 14 days respectively after treatment.

The fleabanes having the length of 12cm was treated according to the results are also disclosed in the following Table 3.

**Table 3.**

| Test Result for Fleabane | | | | | | | |
|---|---|---|---|---|---|---|---|
| | Dosage (/10a) | Agrichemical Effect after Treatment (%) | | | | | |
| | | 1 Day | 2 Day | 4 Day | 7 Day | 10 Day | 14 Day |
| Example 1 | 580g | 85 | 88 | 90 | 85 | 80 | 70 |
| | 1160g | 86 | 88 | 92 | 90 | 85 | 77 |
| Example 2 | 580g | 80 | 88 | 88 | 88 | 78 | 68 |
| | 1160g | 85 | 90 | 92 | 88 | 84 | 75 |
| Example 3 | 435g | 85 | 90 | 90 | 90 | 85 | 70 |
| | 870g | 90 | 92 | 93 | 94 | 92 | 80 |
| Example 4 | 435g | 85 | 89 | 89 | 90 | 86 | 72 |
| | 870g | 90 | 90 | 90 | 89 | 85 | 80 |
| Comparative Example 1 | 300ml | 80 | 86 | 85 | 85 | 76 | 65 |
| | 600ml | 90 | 90 | 89 | 88 | 88 | 70 |
| Comparative Example 2 | 300ml | 10 | 20 | 30 | 40 | 70 | 73 |
| | 600ml | 10 | 25 | 45 | 60 | 82 | 83 |

As is shown above, the water dispersible granule prepared according to each example showed superior agrichemical effect against fleabanes, compared with the soluble concentrate of paraquat in comparative example 1 in treatment with reference and double quantity. It also showed superior effect-continuation, that is, lower regenerating ratio, compared with agrichemical in the comparative example 1. It also showed much superior initial effect, compared with agrichemical in the comparative examples.

### Test of Agrichemical Effect on Mugwort

After treating the mugworts with the products prepared from the examples and the comparative examples, the agrichemical effect was checked 1, 2, 4, 7, 10 and 14 days respectively after treatment.

The barnyard millet having the length of 20cm was treated according to the results are also disclosed in the following Table 4.

**Table 4.**

| Test Result for Mugwort | | | | | | | |
|---|---|---|---|---|---|---|---|
| | Dosage (/10a) | Agrichemical Effect after Treatment (%) | | | | | |
| | | 1 Day | 2 Day | 4 Day | 7 Day | 10 Day | 14 Day |
| Example 1 | 580g | 86 | 95 | 96 | 92 | 87 | 80 |
| | 1160g | 90 | 98 | 100 | 95 | 90 | 85 |
| Example 2 | 580g | 85 | 93 | 97 | 93 | 88 | 83 |
| | 1160g | 88 | 96 | 99 | 94 | 90 | 86 |
| Example 3 | 435g | 86 | 96 | 96 | 90 | 85 | 80 |
| | 870g | 90 | 98 | 100 | 96 | 91 | 86 |
| Example 4 | 435g | 86 | 93 | 96 | 91 | 86 | 81 |
| | 870g | 88 | 96 | 100 | 95 | 90 | 85 |
| Comparative Example 1 | 300ml | 85 | 90 | 93 | 89 | 84 | 76 |
| | 600ml | 88 | 92 | 95 | 90 | 85 | 80 |
| Comparative Example 2 | 300ml | 5 | 5 | 20 | 40 | 70 | 92 |
| | 600ml | 5 | 10 | 25 | 60 | 85 | 99 |

As is shown above, the water dispersible granule prepared according to each example showed superior agrichemical effect against mugworts, compared with the soluble concentrate of paraquat in comparative example 1 in treatment with reference and double quantity. It also showed superior effect-continuation, that is, lower regeneration ratio after 14 days, compared with the soluble concentrate of paraquat.

### Test of Agrichemical Effect on Copperleaf

After treating the copperleaves with the products prepared from the examples and the comparative examples, the agrichemical effect was checked 1, 2, 4, 7, 10 and 14 days respectively after treatment.

The copperleaves having the length of 15cm was treated according to the results are also disclosed in the following Table 5.

**Table 5.**

| Test Result for Copperleaf | | | | | | | |
|---|---|---|---|---|---|---|---|
| | Dosage (/10a) | Agrichemical Effect after Treatment (%) | | | | | |
| | | 1 Day | 2 Day | 4 Day | 7 Day | 10 Day | 14 Day |
| Example 1 | 580g | 80 | 90 | 95 | 100 | 100 | 98 |
| | 1160g | 86 | 94 | 100 | 100 | 100 | 99 |
| Example 2 | 580g | 82 | 93 | 95 | 99 | 100 | 97 |
| | 1160g | 85 | 96 | 97 | 100 | 100 | 100 |
| Example 3 | 435g | 83 | 89 | 96 | 100 | 100 | 96 |
| | 870g | 86 | 98 | 100 | 100 | 100 | 99 |
| Example 4 | 435g | 82 | 90 | 95 | 100 | 100 | 97 |
| | 870g | 86 | 96 | 96 | 100 | 100 | 100 |
| Comparative Example 1 | 300ml | 80 | 90 | 96 | 100 | 100 | 95 |
| | 600ml | 85 | 96 | 98 | 100 | 100 | 97 |
| Comparative Example 2 | 300ml | 0 | 0 | 8 | 20 | 30 | 40 |
| | 600ml | 0 | 0 | 10 | 25 | 40 | 50 |

As is shown above, the water dispersible granule prepared according to each example showed superior agrichemical effect against copperleaves, compared with the soluble concentrate of paraquat in comparative example 1 in treatment with reference and double quantity. Further, there were few regenerated copperleaves even 14 days after treatment.

### Test of Agrichemical Effect Stability after Long-term Storage

Agrichemical effect of the water dispersible granule that was stored for a predetermined period on barnyard millets was tested in order to check the effect drop.

The products prepared according to the examples and the comparative example 1 were tested immediately after preparation, after 1, 2, 3, 6 and 12 month storage, respectively. The agrichemical effect was checked on the next day of treatment according to the following Table 6.

**Table 6.**

| Test Result after Long-term Storage | | | | | | |
|---|---|---|---|---|---|---|
| | Dosage (/10a) | Agrichemical Effect after Treatment (%) | | | | |
| | | Immediately after preparation | a month later | 2 months later | 6 months later | A year later |
| Example 1 | 580g | 90 | 92 | 88 | 91 | 89 |
| Example 2 | 580g | 91 | 90 | 89 | 91 | 92 |
| Example 3 | 435g | 89 | 88 | 90 | 98 | 91 |
| Example 4 | 435g | 92 | 87 | 90 | 90 | 88 |
| Comparative Example 1 | 300ml | 89 | 90 | 91 | 90 | 87 |

As is shown above, the water dispersible granule according to the examples effect on barnyard millets after long-term storage like the products of the comparative examples. Therefore, it has no problem related to long-term storage.

### Storage Stability Test

To confirm the storage stability of the product according to the examples, time course test was carried out at 15°C and 50°C. The result are disclosed in following Table 7

**Table 7.**

| Test Result of the Water Dispersible Granule according to the Examples | | | | | | | |
|---|---|---|---|---|---|---|---|
| | Storage Temperature | Net content of paraquat(%) | | | | | |
| | | Immmediately preparation | A week later | 4 weeks later | 8 weeks later | 16 weeks later | 32 weeks later |
| Example 1 | 15°C | 12.8 | 12.8 | 12.8 | 12.8 | 12.8 | 12.8 |
| | 50°C | 12.8 | 12.8 | 12.8 | 12.7 | 12.7 | 12.6 |
| Example 2 | 15°C | 12.8 | 12.8 | 12.8 | 12.8 | 12.8 | 12.8 |
| | 50°C | 12.8 | 12.8 | 12.8 | 12.8 | 12.7 | 12.7 |
| Example 3 | 15°C | 17.0 | 17.0 | 17.0 | 17.0 | 17.0 | 17.0 |
| | 50°C | 17.0 | 16.9 | 16.9 | 16.9 | 16.9 | 16.7 |
| Example 4 | 15°C | 17.0 | 17.0 | 17.0 | 17.0 | 17.0 | 17.0 |
| | 50°C | 17.0 | 17.0 | 17.0 | 16.9 | 16.8 | 16.8 |

As is shown above only, less than 2% of Paraguat in the water dispersible granule prepared according to the present invention was decomposed even after 32 weeks' storage under the harsh condition of 50 °C. So, the composition is stable after the long-term storage.

As is shown from the above test results, the water dispersible granule according to the present invention shows superior effect on barnyard millets, crab grasses, fleabanes, mugworts and copperleaves. Further, it has the effect of lowering the regenerating ratio of weeds, such as barnyard millets, crab grasses, fleabanes, mugworts and copperleaves that have high regenerating ratio. Further, it has agrichemical effect stability and storage stability even after long-term storage.

### Industrial Applicability

The water dispersible granule according to the present invention is prepared by mixing and kneading paraquat, surfactant, breakage promoter and extender, forming granules out of kneaded mixture, and drying the granules.

It can prevent the danger of poisoning caused by contact or ingestion when conventional soluble concentrate or wettable powder is used, and of poisoning due to intake by accident or on purpose.

Further, the water dispersible granule according to the present invention maintains its effect after long-term storage. So, it can remove the weeds on ridgeway or non-farm land effectively. Further, it has fast effect as the soluble concentrate of paraquat, so it can remove the weeds only 3 days after treatment.
Though the present invention was described in detail with specific embodiments, it is obvious that the present invention can be modified and corrected variously within the scope of its technical concept. And it is also obvious that such modification and correction fall within the appended claims.

## Claims

1. A method for preparing water dispersible granule containing paraquat comprising the following steps:
a) mixing 5-50wt% of Paraquat Dichloride, 5-30wt% of surfactant, 1-20wt% of breakage promoter and the rest of extender, and kneading the mixture together with 1-15 wt% of water for the mixture at room temperature for 10 min-lhr, wherein said breakage promoter is at least one selected from the group consisting of sodium sulfate, sodium nitrate, potassium chloride, ammonium sulfate, urea and polyvinylpyrrolidine;
b) forming granules out of the kneaded mixture using a granulator; and
c) drying said granules in a dryer at 70-150 °C for 10 min-1 hr.

2. The method according to claim 1, wherein said extender is at least one selected from the group consisting of diollite, kaolin, clay, white carbon, watersoluble starch, calcium carbonate, bentonite, pyrophyllite and talc.

3. Water dispersible granules prepared by the method of the claim 1.

## Patentansprüche

1. Verfahren zur Herstellung Wasser-dispergierbaren Granulats, das Paraquat enthält, umfassend die folgenden Schritte:
a) Mischen von 5-50 Gew.-% Paraquatdichlorid, 5-30 Gew.-% Tensid, 1-20 Gew.-% Bruchförderer bzw. Breakage-promoter und als den Rest Streckmittel und Kneten des Gemischs zusammen mit 1-15 Gew.-% Wasser zu dem Gemisch bei Raumtemperatur für 10 Min-1 Std, wobei der Bruchförderer wenigstens einer ist, der ausgewählt ist aus der Gruppe, bestehend aus Natriumsulfat, Natriumnitrat, Kaliumchlorid, Ammoniumsulfat, Harnstoff und Polyvinylpyrrolidin;
b) Bilden von Granulat aus dem gekneteten Gemisch unter Verwendung eines Granulators; und
c) Trocknen des Granulats in einem Trockner bei 70-150 °C für 10 Min.-1 Std.

2. Verfahren gemäß Anspruch 1, wobei das Streckmittel wenigstens eines ist, das ausgewählt ist aus der Gruppe, bestehend aus Diollit, Kaolin, Ton, Weißruß, wasserlösliche Stärke, Calciumcarbonat, Bentonit, Pyrophyllit und Talk.

3. Wasser-dispergierbares Granulat, hergestellt durch das Verfahren gemäß Anspruch 1.

## Revendications

1. Procédé de préparation de granule dispersable dans l'eau contenant un dichlorure de paraquat comprenant les étapes suivantes :
a) mélange de 5 à 50 % en poids de dichlorure de paraquat, 5 à 30 % en poids d'agent tensio-actif, 1 à 20 % en poids d'un promoteur de fragmentation et le reste d'agent d'extension, et pétrissage du mélange avec 1 à 15 % en poids d'eau pour le mélange à température ambiante durant 10 minutes à 1 heure, dans lequel ledit promoteur de fragmentation est au moins un des éléments choisis dans le groupe se composant du sulfate de sodium, du nitrate de sodium, du chlorure de potassium, du sulfate d'ammonium, de l'urée et du polyvinyle de pyrrolidine ;
b) formation de granules à partir du mélange pétri en utilisant un granulateur ; et
c) séchage desdites granules dans un appareil de séchage à une température de 70 à 150 °C durant 10 minutes à 1 heure.

2. Procédé selon la revendication 1 dans lequel ledit agent d'extension est au moins un élément choisi dans du groupe se composant de la diolite, du kaolin, de l'argile, du carbone blanc, d'amidon soluble dans l'eau, du carbonate de calcium, de la bentonite, de la pyrophyllite et du talc.

3. Granules dispersables dans l'eau préparées par le procédé selon la revendication 1.
